# EUROPEAN PATENT APPLICATION

(11) **EP 3 617 967 A1**
(43) Date of publication of application: **04.03.2020**
(21) Application number: 19192546.0
(22) Date of filing: 20.08.2019
(51) Int. Cl.: G06Q 10/06

(54) **TAXI SYSTEM WITH IMAGE BASED DETERMINATION OF SPECIAL TRANSPORTATION NEEDS**

(30) Priority: 21.08.2018 US 201862720264 P; 23.08.2018 US 201816109973
(71) Applicant: Aptiv Technologies Limited, 14004 St. Michael (BB)
(72) Inventor: Mangal, Nandita, Los Altos, CA 94024 (US); Laur, Michael H., Mission Viejo, CA 92692 (US)
(74) Representative: Manitz Finsterwald Patent- und Rechtsanwaltspartnerschaft mbB

(57) **Abstract**

A transportation system (10) that includes a camera (14), a taxi-fleet (24) and a controller-circuit (30). The camera (14) is operable to render an image (16) of a pickup-area (18) where a client (12) waits to be picked up. The client (12) is characterized as having one of no-special-needs (20) and a special-need (22). The taxi-fleet (24) includes a standard-taxi (26) and a special-taxi (28). Each of the taxis is operable to pick-up one or more clients (12) at the pickup-area (18). The standard-taxi (26) is not configured to accommodate the special-need (22), and the special-taxi (28) is configured to accommodate the special-need (22). The controller-circuit (30) is in communication with the special-taxi (28) and the camera (14). The controller-circuit (30) is configured to determine that the client (12) in the image (16) has the special-need (22) based on the image (16). In response to the determination that the client (12) has the special-need (22), the controller-circuit (30) is configured direct the special-taxi (28) to pick-up the client (12) with the special-need (22).

## Description

### TECHNICAL FIELD OF INVENTION

This disclosure generally relates to a transportation system, and more particularly relates to a system that uses an image to determine if a client has a special-need and directs a special-taxi to pick-up a client when the special-need is determined, where the special-taxi is equipped to accommodate the client with the special-need.

### BRIEF DESCRIPTION OF DRAWINGS

The present invention will now be described, by way of example with reference to the accompanying drawings, in which:
Fig. 1 is a diagram of a system for operating a vehicle in accordance with one embodiment;
Fig. 2 is a scenario encountered by the system of Fig. 1 in accordance with one embodiment; and
Fig. 3 is a method of operating the system of Fig. 1 in accordance with one embodiment.

### DETAILED DESCRIPTION

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

'One or more' includes a function being performed by one element, a function being performed by more than one element, *e.g.,* in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first contact could be termed a second contact, and, similarly, a second contact could be termed a first contact, without departing from the scope of the various described embodiments. The first contact and the second contact are both contacts, but they are not the same contact.

The terminology used in the description of the various described embodiments herein is for describing embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if' is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

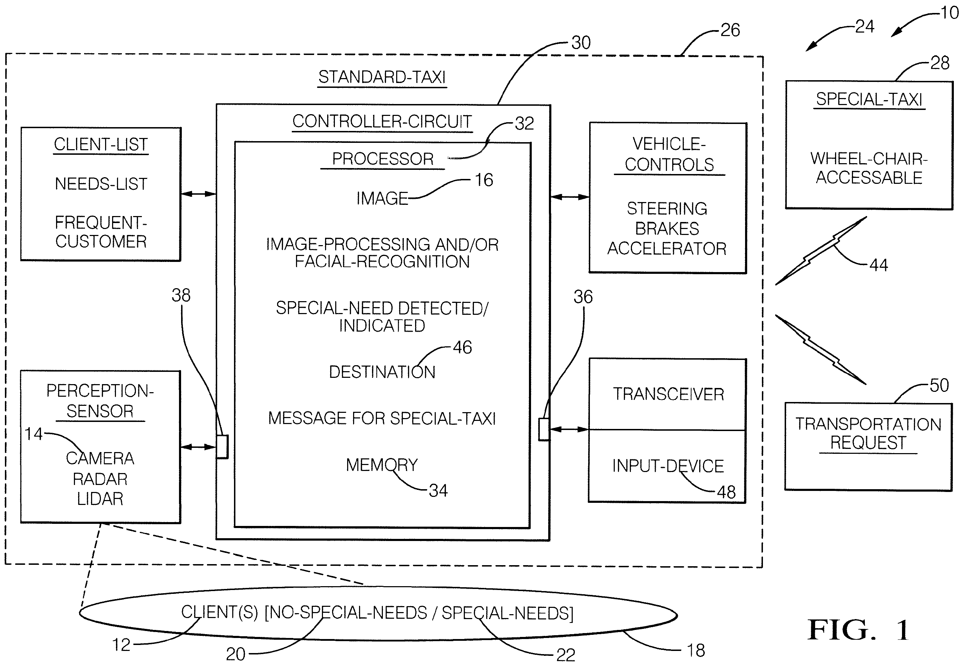

Fig. 1 illustrates a non-limiting example of a transportation system 10, hereafter often referred to as the system 10. As will be explained in more detail below, a useful aspect of the system 10 is to automatically provide to a client 12 of an automated-taxi-service a taxi that is configured to accommodate special-needs of the client 12 such as being able to transport the client 12 while the client 12 is in a wheelchair. That is, the system 10 is configured to automatically detect or determine the special-needs of the client 12 rather than the client 12 having to take some action to convey those special-needs to the automated-taxi-service, i.e. the system 10. Accordingly, the client 12 is characterized as having no-special-needs 20 or a special-need 22. By way of example and not limitation, the special-need 22 may be the use of a wheel-chair or a stroller, having a body-size substantially bigger than average person which may require specialized seating, being part a large group that needs to travel together, or a large amount of luggage/baggage.

The system 10 includes a camera 14 operable to render an image 16 of a pickup-area 18 where the client 12 waits to be picked up. The camera 14 may be mounted on one or more taxies and/or located at the pickup-area 18. The camera 14 may be part of a perception-sensor used by an autonomous (i.e. driverless) taxi, where the perception-sensor may also include one or more instances of radar and/or lidar units, or additional cameras, as will be recognized by those in the automated/autonomous vehicle arts. As will be explained in more detail below, the image 16 may be analyzed using known image-processing techniques to determine if the client 12 is exhibiting evidence of a special-need, e.g. the image 16 shows the client 12 as being in a wheel-chair and/or having a large amount of luggage. Additionally, or alternatively, the image 16 may be analyzed using known facial-recognition techniques to determine the identity of the client 12 which can be used to access a client-list that may identify the client 12 as a prior or frequent-customer and/or may include a needs-list that indicates the client 12 as being on record as having a special-need. Other special needs may include, but are not be limited to, service animals, blind clients with canes who are touching brail signage in a kiosk, deaf clients observed signing or are non-reactionary when several others react to sounds, clients with respirators or oxygen canisters, a smoker, or a client transporting an irregular size box.

The system 10 may include a taxi-fleet 24 that includes, but is not limited to, a standard-taxi 26 and a special-taxi 28. As used herein, the standard-taxi 26 is characterized as being not configured to accommodate the special-need 22, e.g. is not configured to accommodate a wheelchair; and the special-taxi 28 is configured to accommodate the special-need 22, e.g. is configured to accommodate a wheelchair. That is, the configuration of the special-taxi 28 is different from the configuration of the standard-taxi 26. For example, the standard-taxi 26 may be a relatively small vehicle that can transport up to four people who do not have special-needs, and the special-taxi 28 may be equipped with wheel-chair access features and/or is relatively large so as to accommodate the wheelchair or a large group of people. Each of the taxies in the taxi-fleet 24 is characterized as being operable to pick-up one or more clients 12 at the pickup-area 18. While not shown in Fig. 1, it is contemplated that the special-taxi 28 will be equipped like the standard-taxi 26 regarding features like the vehicle-controls, the perception-sensor, and other features shown in Fig. 1.

The vehicles that form the taxi-fleet 24 may each be characterized as an automated vehicle, and may be referred to by some as an automated-mobility-on-demand (AMOD) type of vehicle. As used herein, the term automated vehicle may apply to instances when the standard-taxi 26 and/or the special-taxi 28 is being operated in an automated-mode, i.e. a fully autonomous mode, where a human-operator (not shown) of the standard-taxi 26 and/or the special-taxi 28 may do little more than designate a destination to operate the standard-taxi 26 and/or the special-taxi 28. However, full automation is not a requirement. It is contemplated that the teachings presented herein are useful when the standard-taxi 26 and/or the special-taxi 28 is operated in a manual-mode where the degree or level of automation may be little more than providing navigation guidance to the human-operator who is generally in control of the vehicle-controls, e.g. the steering, accelerator, and/or brakes of the standard-taxi 26 and/or the special-taxi 28.

The system 10 includes a controller-circuit 30 in communication with the special-taxi 28 and/or the standard-taxi 26 via an output 36 (i.e. an input/output data-port) and the camera 14 via an input 38. The communication may be by way of wires, optical-fiber, or wireless-communications as will be recognized by those in the art. The controller-circuit 30, hereafter sometimes referred to as the controller 30, may include one or more instances of a processor 32 such as one or more instances of a microprocessor or other control circuitry such as analog and/or digital control circuitry including an application specific integrated circuit (ASIC) for processing data as should be evident to those in the art. While the system 10 described herein is generally described in terms of having a single instance of the controller 30, it is recognized that the functions of the controller 30 may be shared or distributed among several instances of controllers that are each configured for some specific task. Hereafter, any reference to the controller 30 being configured for something is to also be interpreted as suggesting that the processor 32 may also be configured for the same thing. It is also recognized that there may be multiple instances of processors in any instance of the controller 30. The controller 30 may include memory 34, i.e. non-transitory computer-readable storage-medium, including non-volatile memory, such as electrically erasable programmable read-only memory (EEPROM) for storing one or more routines, thresholds, and captured data. The memory 34 may be part of the processor 32, or part of the controller 30, or separate from the controller 30 such as remote memory stored in the cloud. The one or more routines may be executed by the controller 30 or the processor 32 to perform steps for determining if the client 12 has or exhibits the special-needs 22 based on signals received by the controller 30 from the camera 14, radar, lidar, or any combination thereof, as described herein.

While Fig. 1 may be interpreted to suggest that the controller 30 is part of the standard-taxi 26, this is not a requirement. It is contemplated that the controller 30 (or the processor 32) may be located apart from the special-taxi 28 and the standard-taxi 26. That is, there may be multiple instances of the controller 30 or the processor 32 located within either the special-taxi 28 and/or the standard-taxi 26 and/or remote from either vehicle such as at a central-control facility.

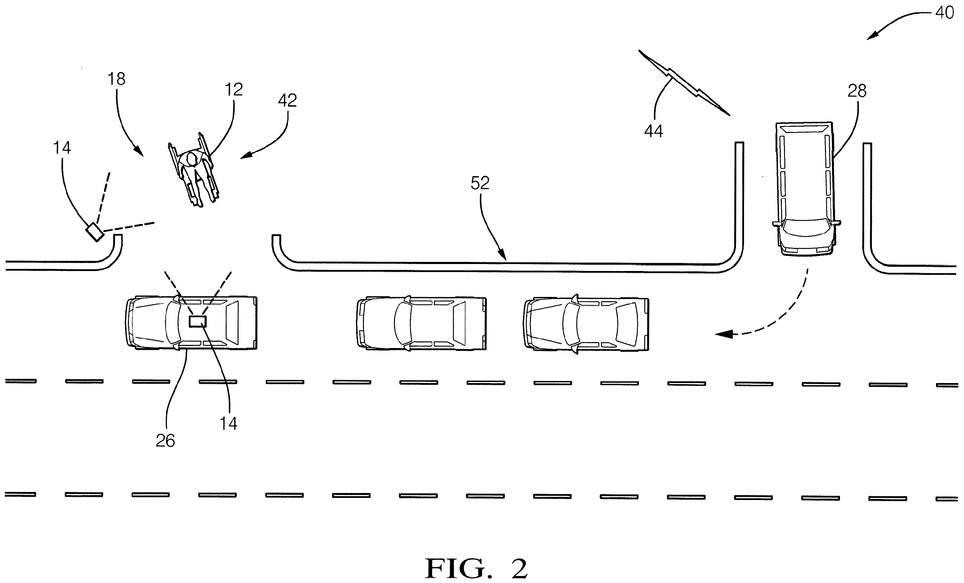

Fig. 2 illustrates a non-limiting example of a scenario 40 where the client 12 is seated in a wheelchair 42 at the pickup-area 18, and is waiting to be transported by an automated-taxi. Non-limiting examples of the camera 14 are shown mounted on the standard-taxi 26 and located proximate to the pickup-area 18, either of which could provide the image 16 that shows the client 12. As previously noted, the standard-taxi 26 is not able to accommodate the client 12 because of the wheelchair 42, so the system 10 or the controller 30 (Fig. 1) is configured to send a message 44, e.g. a wireless transmission, to the special-taxi 28 with instructions for the special-taxi 28 to proceed to the pickup-area 18 and pick-up the client 12. The message may also include a destination 46 of the client 12 if facial-recognition was used to determine the identity of the client 12, and the destination 46 is recalled from the client-list.

Returning to Fig. 1, the controller-circuit 30 (or the processor 32) is configured (e.g. programmed) to determine that the client 12 in the image 16 has the special-need 22 based on the image 16. The controller 30 may use known facial recognition algorithms to identify client 12 and the special-need 22 of the client 12 may be indicated in a client-list that may be stored at a remote server or in the cloud. Alternatively, image-processing may be used to determine that the client 12 exhibits the special-need 22 in the image 16, e.g. a wheelchair may be detected in image 16. In response to a determination that the client 12 has the special-need 22, the system 10 or the controller 30 may direct (e.g. send a command/message or directly operate) the special-taxi 28 to pick-up the client 12 with the special-need 22.

It is contemplated that the special-need 22 of the client 12 may be communicated to the system 10 or the controller 30 prior to the client 12 arriving at the pickup-area 18. To convey this information from the client 12, the system 10 may include an input-device 48 such as a keyboard or touch-screen at the pickup-area 18, or smart-phone carried by the client 12. The input-device 48 is operable by the client 12 to indicate the special-need 22. The controller-circuit 30 may be in communication with the input-device 48 via a transceiver. The controller-circuit is configured to, in response to receiving an indication of the special-need 22, direct (e.g. send a message 44, or directly operate) the special-taxi 28 to pick-up the client with the special-need.

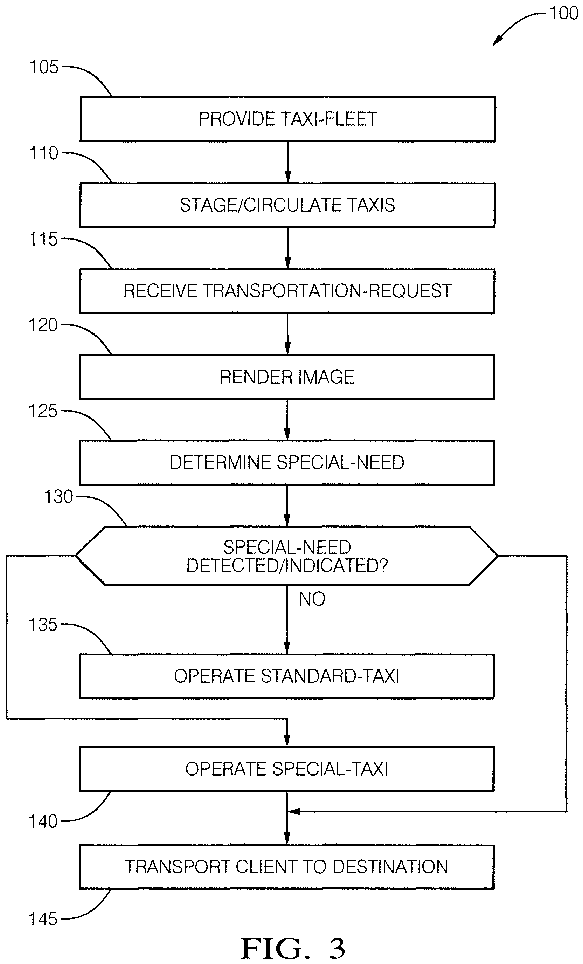

Fig. 3 illustrates a non-limiting example of a method 100 of operating the transportation system 10.

Step 105, PROVIDE TAXI-FLEET, may include establishing a communication means to transmit the message 44 to the special-taxi 28 when necessary, the conditions that necessitate transmitting the message 44 are described in more detail below. Step 105 may also include providing a taxi-fleet that includes a standard-taxi 26 and a special-taxi 28, each of which is operable to pick-up one or more clients 12 at a pickup-area 18. The standard-taxi 26 is not configured to accommodate a special-need 22 of the client 12, and the special-taxi 28 is configured to accommodate the special-need 22 of the client 12.

Step 110, STAGE / CIRCULATE TAXIS, may include operating or programming the standard-taxi 26 to wait at a taxi-queue 52 (Fig. 2) until there is no instance of a taxi at the pickup-area 18, and then proceed to the pickup-area 18 and wait for clients 12. While waiting at the pickup-area 18, an instance of the camera 14 that is mounted on the standard-taxi 26 may be used to render the image 16 of the client 12 as he/she approaches the standard-taxi 26. After the standard-taxi 26 or the special-taxi 28 transports the client 12 to the destination 46 of the client 12, the standard-taxi 26 or the special-taxi 28 may return or circulate back to the taxi-queue 52 and wait for other clients.

Step 115, RECEIVE TRANSPORATION-REQUEST, is an optional step that may include the client 12 making a reservation for ground transportation at some predetermined time of day and/or to a destination 46, and the system 10 subsequently transmitting a transportation-request 50 to the standard-taxi 26 or the special-taxi 28 at the appropriate time.

Step 120, RENDER IMAGE, may include rendering, with a camera 14, an image 16 of a pickup-area 18 where a client 12 waits to be picked up. The image 16 may include multiple frames from one or more cameras so the client 12 can viewed from multiple angles and thereby better determine if the client 12 exhibits the special-need 22 and/or so a more reliable facial-recognition of the client 12 can be made.

Step 125, DETERMINE SPECIAL-NEED, may include determining that the client 12 in the image 16 has the special-need 22 based on the image 16. The determination may be by direct analysis, i.e. image-processing detects a wheelchair 42 present in the image 16 and the client 12 is sitting in the wheelchair 42, and/or the determination may be by recalling information about the client 12 from a client-list following a determination of the identity of the client 12 using facial-recognition. Optionally, this step may include receiving from an input-device 48 operable by the client 12 an indication of the special-need 22.

Step 130, SPECIAL-NEED DETECTED/INDICATED?, is a decision step that directs the standard-taxi 26 or the special-taxi 28 to the pickup-area 18. If there is no special need, then the standard-taxi 26 is used, i.e. the method 100 proceeds to step 135. If the special-need 22 is detected or determined, the special-taxi 28 is used, i.e. the method 100 proceeds to step 140.

Step 135, OPERATE STANDARD-TAXI, may include the standard-taxi 26 moving to the pickup-area 18, allowing one or more clients who don't have a special-need to board the standard-taxi 26, and transporting those clients to their destinations.

Step 140, OPERATE SPECIAL-TAXI, may include, in response to the system 10 or the controller 30 or the processor 32 determining that the client 12 has the special-need 22, directing (e.g. by sending the message 44 or direct operating control of vehicle-controls) the special-taxi 28 to pick-up the client 12 with the special-need 22. If the special-need 22 was indicated by the client 12 rather than the system 10 automatically determining the special-need 22, then step 140 may include directing the special-taxi 28 to pick-up the client 12 with the special-need 22 in response to receiving the indication of the special-need 22.

Step 145, TRANSPORT CLIENT TO DESTINATION, may include operating the standard-taxi 26 or the special-taxi 28 to transport the client 12 to the destination 46.

Described herein is a first device 30 that includes one or more processors 32; memory 34; and one or more programs 105-145 stored in memory 34. The one or more programs 105-145 including instructions for performing all or part of the method 100. Also, described herein is a non-transitory computer-readable storage-medium 34 that includes one or more programs 105-145 for execution by one or more processors 32 of a first device 30, the one or more programs 105-145 including instructions which, when executed by the one or more processors 32, cause the first device to perform all or part of the method 100.

Accordingly, a transportation system (the system 10), a controller 30 for the system 10, and a method 100 of operating the system 10 are provided. The system 10 and the method 100 provide for the automated detection of a special-need 22 of a client 12, and coordinates the use of a special-taxi 28 that is configured to accommodate the special-need 22 of the client 12. By being automated, the need for the client 12 to engage in special communications to convey the special-need 22 to the system 10 and possibly have to wait longer than desirable for the special-taxi 28 to arrive is avoided.

While this invention has been described in terms of the preferred embodiments thereof, it is not intended to be so limited, but rather only to the extent set forth in the claims that follow.

## Claims

1. A transportation system (10), said system (10) comprising:
a camera (14) operable to render an image (16) of a pickup-area (18) where a client (12) waits to be picked up, wherein the client (12) is characterized as having one of no-special-needs (20) and a special-need (22);
a taxi-fleet (24) that includes a standard-taxi (26) and a special-taxi (28), each operable to pick-up one or more clients (12) at the pickup-area (18), wherein the standard-taxi (26) is not configured to accommodate the special-need (22), and the special-taxi (28) is configured to accommodate the special-need (22); and
a controller-circuit (30) in communication with the special-taxi (28) and the camera (14); said controller-circuit (30) configured to determine that the client (12) in the image (16) has the special-need (22) based on the image (16); and, in response to the determination that the client (12) has the special-need (22), direct the special-taxi (28) to pick-up the client (12) with the special-need (22).

2. The system (10) in accordance with claim 1, wherein the system (10) includes an input-device (48) operable by the client (12) to indicate the special-need (22); the controller-circuit (30) is in communication with the input-device (48), and the controller-circuit (30) is configured to, in response to receiving an indication of the special-need (22), direct the special-taxi (28) to pick-up the client (12) with the special-need (22).

3. A transportation system (10), said system (10) comprising:
a standard-taxi (26) that is not configured to accommodate a special-need (22) of a client (12);
a camera (14) mounted on the standard-taxi (26), said camera (14) operable to render an image (16) of a pickup-area (18) where the client (12) waits to be picked up, wherein the client (12) is characterized as having one of no-special-needs (20) and the special-need (22); and
a controller-circuit (30) in communication the camera (14); said controller-circuit (30) configured to determine that the client (12) in the image (16) has the special-need (22) based on the image (16); and, in response to the determination that the client (12) has the special-need (22), direct a special-taxi (28) to pick-up the client (12) with the special-need (22), said special-taxi (28) configured to accommodate the special-need (22).

4. The system (10) in accordance with claim 3, wherein the system (10) includes an input-device (48) operable by the client (12) to indicate the special-need (22); the controller-circuit (30) is in communication with the input-device (48), and the controller-circuit (30) is configured to, in response to receiving an indication of the special-need (22), direct the special-taxi (28) to pick-up the client (12) with the special-need (22).

5. A controller-circuit (30) for a transportation system (10), said controller-circuit (30) comprising:
an input (38) configured to communicate with a camera (14) operable to render an image (16) of a pickup-area (18) where a client (12) waits to be picked up, wherein the client (12) is characterized as having one of no-special-needs (20) and a special-need (22);
an output (36) configured to communicate with a taxi-fleet (24) that includes a standard-taxi (26) and a special-taxi (28), each operable to pick-up one or more clients (12) at the pickup-area (18), wherein the standard-taxi (26) is not configured to accommodate the special-need (22), and the special-taxi (28) is configured to accommodate the special-need (22); and
a processor (32) in communication with the special-taxi (28) and the camera (14); said processor (32) configured to determine that the client (12) in the image (16) has the special-need (22) based on the image (16); and, in response to the determination that the client (12) has the special-need (22), direct the special-taxi (28) to pick-up the client (12) with the special-need (22).

6. The system (10) in accordance with claim 5, wherein the controller-circuit (30) includes a data-port configured to communicate with an input-device (48) operable by the client (12) to indicate the special-need (22); the processor (32) is in communication with the input-device (48), and the processor (32) is configured to, in response to receiving an indication of the special-need (22), direct the special-taxi (28) to pick-up the client (12) with the special-need (22).

7. A method (100) of operating a transportation system (10), said method (100) comprising:
providing a taxi-fleet (24) that includes a standard-taxi (26) and a special-taxi (28), each operable to pick-up one or more clients (12) at a pickup-area (18), wherein the standard-taxi (26) is not configured to accommodate the special-need (22), and the special-taxi (28) is configured to accommodate the special-need (22);
rendering, with a camera (14), an image (16) of a pickup-area (18) where a client (12) waits to be picked up, wherein the client (12) is characterized as having one of no-special-needs (20) and a special-need (22);
determining that the client (12) in the image (16) has the special-need (22) based on the image (16); and
in response to the determining that the client (12) has the special-need (22), directing the special-taxi (28) to pick-up the client (12) with the special-need (22).

8. The method (100) in accordance with claim 7, wherein the method (100) includes
receiving from an input-device (48) operable by the client (12) an indication of the special-need (22); and
in response to receiving the indication of the special-need (22), directing the special-taxi (28) to pick-up the client (12) with the special-need (22).

9. A first device (30) comprising:
one or more processors (32);
memory (34); and
one or more programs (105-145) stored in memory (34), the one or more programs (105-145) including instructions for performing the method (100) of any one of claims 7-8.

10. A non-transitory computer-readable storage-medium (34) comprising one or more programs (105-145) for execution by one or more processors (32) of a first device (30), the one or more programs (105-145) including instructions which, when executed by the one or more processors (32), cause the first device (30) to perform the method (100) of any one of claims 7-8.
